Europäisches Patentamt

European Patent Office

Office européen des brevets

(11) Publication number: **0 411 140 A1**

## EUROPEAN PATENT APPLICATION
### published in accordance with Art. 158(3) EPC

(21) Application number: 90902369.9

(22) Date of filing: 29.01.90

(86) International application number:
PCT/JP90/00104

(87) International publication number:
WO 90/08621 (09.08.90 90/19)

(51) Int. Cl.5: **B23K 26/08**

(30) Priority: 30.01.89 JP 117433/89

(43) Date of publication of application:
06.02.91 Bulletin 91/06

(84) Designated Contracting States:
DE FR GB

(71) Applicant: FANUC LTD.
3580, Shibokusa Aza-Komanba, Oshino-mura
Minamitsuru-gun, Yamanashi 401-05(JP)

(72) Inventor: TORII, Nobutoshi
Fuyo Haitsu 308 65-4, Takakura-cho
Hachioji-shi Tokyo 192(JP)
Inventor: ITO, Susumu,FANUC Mansion
Harimomi 7-204

3539-1, Shibokusa Oshino-mura
Minamitsuru-gun
Yamanashi 401-05(JP)
Inventor: TERADA, Akihiro,FANUC Mansion
Harimomi 8-207
3511-1, Shibokusa Oshino-mura
Minamitsuru-gun Yamanashi 401-05(JP)
Inventor: SASAKI, Yasuo,FANUC Mansion
Harimomi 8-102
3511-1, Shibokusa Oshino-mura
Minamitsuru-gun Yamanashi 401-05(JP)

(74) Representative: Jackson, Peter Arthur et al
Gill Jennings & Every, 53-64 Chancery
Laneane
London WC2A 1HN(GB)

(54) ARTICULATED ARM TYPE INDUSTRIAL LASER ROBOT.

(57) This invention relates to articulated arm type industrial laser robot equipped with at least two robot arms (24:26, 44:46, 82:84) of a joint coupling type that are held by robot base( 21, 41, 81) either directly or through a swivel drum (42) and laser beam emission robot wrists (48, 86) held by the foremost tip (46a) of these robot arms (24:26, 44:46, 82:84). This laser robot further includes laser beam passage means (31,50,96) having a hollow ball spline shaft (30,54,94) and a ball spline nut (28,52,92) and extending and contracting between the two robot arms ((24:26, 44:46, 82:84) in accordance with their relative swivel motion so as to guide the laser beam introduced from outside the robot machine body to the robot wrist (48,86).

Fig. 1

Xerox Copy Centre

# ARTICULATED INDUSTRIAL LASER ROBOT

## TECHNICAL FIELD

The present invention relates to an industrial robot and, more particularly, to an articulated industrial laser robot which uses the energy of a laser beam for industrial purposes including welding, cutting and deburring.

## BACKGROUND ART

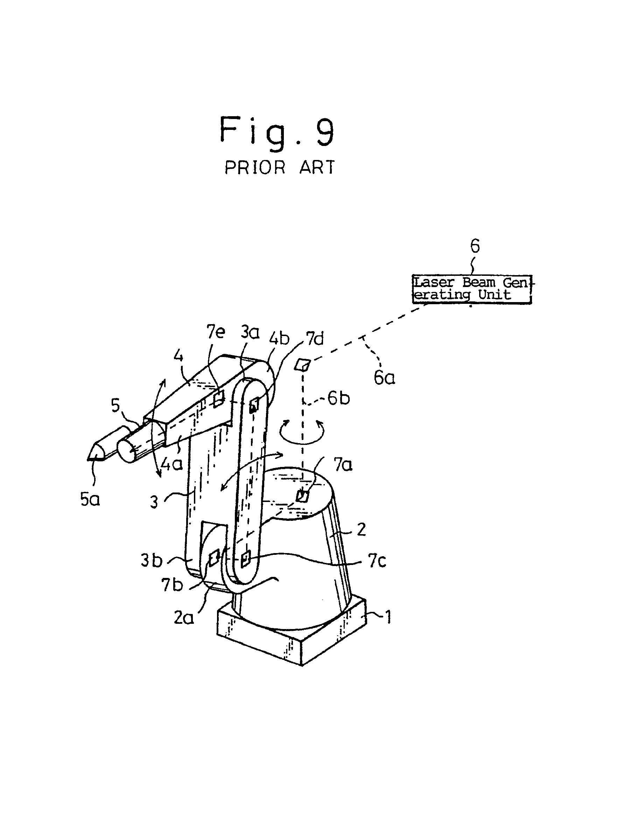

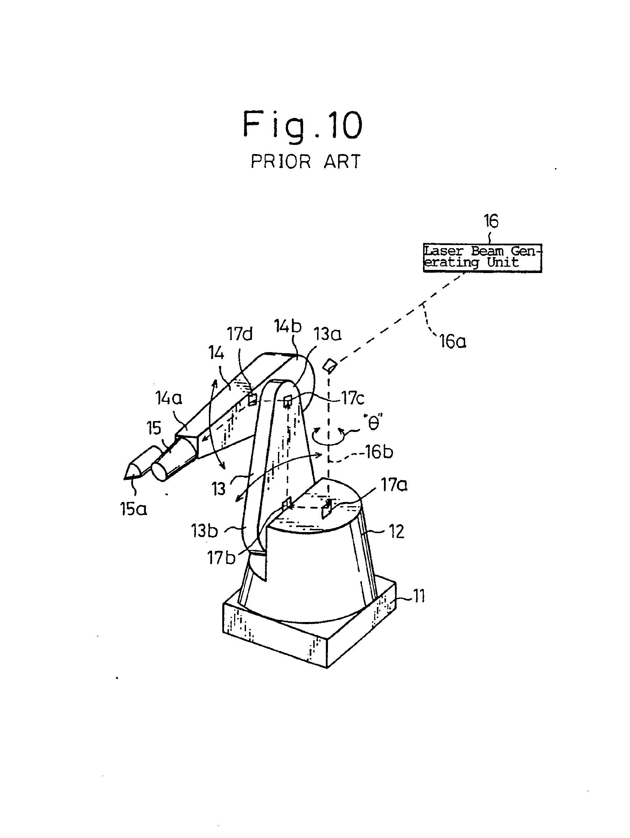

Various industrial laser robots have been proposed, particularly, articulated industrial laser robots, having a robot wrist assembly forming the extremity of a robot unit as a laser beam emitting unit, and using a laser beam emitted by a laser beam generating unit and transmitted through a laser beam transmitting piping to the interior of the robot body. Figures 9 and 10 show two examples of such articulated industrial laser robots.

The robot unit shown in Fig. 9 comprises a robot base 1, a swivel robot body 2 set upright on the robot base 1, a first robot arm 3 articulated at its rear end 3b by a clevis joint to a projection 2a formed in the upper part of the swivel robot body 2, a second robot arm 4 articulated at its rear end 4b to the bifurcated front end 3a of the first robot arm 3, and a robot wrist assembly 5 having two degrees of freedom of motion and attached to the front end 4a of the second robot arm 4. A laser beam emitted by a laser beam generating unit 6 separate from the robot unit is transmitted through laser beam transmission pipes 6a and 6b to the center of swivel motion of the swivel robot body 2. The direction of travel of the laser beam is changed by a mirror 7a provided within the swivel robot body 2, a mirror 7b provided in the projection 2a, a mirror 7c provided at the rear end 3a of the first robot arm 3, a mirror 7d provided at the rear end 3a of the first robot arm 3 and a mirror 7e provided at the rear end 4b of the second robot arm 4 so that the laser beam travels along laser beam paths indicated by dotted lines to the laser beam emitting unit 5a of the robot wrist assembly 5. Since the mirrors for changing the direction of travel of the laser beam are provided respectively at the articulated portions of the movable robot members, the robot unit needs five comparatively expensive mirrors 7a to 7e. Furthermore, the energy of the laser beam is attenuated every time the laser beam is reflected by the mirror, and is reduced to a considerably low level before the laser beam reaches the laser beam emitting unit 5a. Still further, the large number of mirrors requires much time for polishing the mirrors and making cumbersome adjustments, such as an angular adjustment, for maintenance of the mirrors.

The robot unit shown in Fig. 10 comprises a robot base 11, a swivel robot body 12 set upright on the robot base 11, a first robot arm 13 pivotally joined at its rear end 13b to the side surface of the robot body 12, a second robot arm 14 pivotally joined at its rear end 14b to the side surface of the front end 13a of the first robot arm 13, and a robot wrist assembly 15 attached to the front end 14a of the second robot arm 14. A laser beam emitted by a laser beam generating unit 16 is transmitted, similarly to the transmission of the laser beam to the robot unit of Fig. 9, along laser beam paths 16a and 16b to the center of swivel motion of the swivel robot body 12. Then, the direction of travel of the laser beam is changed by four mirrors 17a, 17b, 17c and 17d so that the laser beam reaches the laser emitting unit 15a of the robot wrist assembly 15. Although the number of the mirrors of this laser robot unit is smaller than that of mirrors, i.e., five mirrors, of the laser robot of Fig. 9, by one, the first robot arm 13 and the second robot arm 14 are articulated to the robot body 12 on one side of the robot body 12 in an offset arrangement. The use of the side region of the swivel robot body 12 for disposing the robot arm means unavoidably increases the overall lateral size of the robot unit and requires a considerably large space for swinging the robot arms 13 and 14 when swiveling the swivel robot body 12. Accordingly, a large space must be secured around the robot unit to avoid interference between the robot unit and equipment arranged around the robot unit.

Furthermore, it is possible that the first robot arm 13 or the second robot arm 14 will interfere with the fixed laser beam path 16a when the swivel robot body 12 is swiveled about a $\theta$-axis, and thus the laser beam path 16a must be cautiously determined so that the first robot arm 13 or the second robot arm 14 will not interfere with the laser beam path 16a.

Since the laser beam transmission pipes are extended within the robot unit and the mirrors are arranged to change the direction of travel of the laser beam, which is an arrangement common to the above-described two conventional laser robots, the arrangement of motors and rotation angle detectors for driving and controlling the first and second robot arms, wiring for the motors and the rotation angle detectors, piping for supplying a cooling liquid to the mirrors and returning the same from the mirrors, and piping for supplying an auxiliary gas for laser machining in combination with the laser beam transmission pipes within the robot unit requires the robot unit to have a very complicated internal structure and requires cumbersome work for arranging the wiring and the piping.

When the wiring and the piping are arranged externally, it is possible for the wiring and the piping to be damaged during the operation of the robot.


## DISCLOSURE OF THE INVENTION

Accordingly, a principal object of the present invention is to solve the foregoing problems of the conventional articulated industrial laser robots.

Another object of the present invention is to provide a high-performance articulated industrial laser robot requiring the least necessary number of internal mirrors for reflecting a laser beam and capable of transmitting the laser beam through its robot unit without a significant reduction in the energy of the laser beam.

In view of the object of the invention, the present invention provides an articulated industrial laser robot having at least two articulated robot arm means held directly on or indirectly through a swivel robot body on a robot base, and a robot wrist assembly for emitting a laser beam, held on the extremity of the robot arm means, comprising:

laser beam path means for guiding the laser beam received from an external laser beam source to the robot wrist assembly, comprising a telescopic tube assembly extended between the two robot arms, capable of extending and contracting according to the swing motion of the two robot arms relative to each other, and comprising an externally ball-splined hollow shaft and an internally ball-splined hollow sleeve; and

the least necessary number of laser beam reflecting mirror means provided within the laser beam path means.

The arrangement of the laser beam path means and the laser beam reflecting mirror means of this laser robot separate from the swivel robot body and the robot arms facilitates maintenance work remarkably. Formed in a very compact construction, the laser robot requires a comparatively small space for preventing the interference of the laser robot with the equipments arranged around the laser robot. The reduction in the number of laser beam reflecting mirrors limits the attenuation of the energy of the laser beam to the least extent during the transmission of the laser beam and maintains the energy of the laser beam at a high level. Wiring for the drive units for driving the movable robot components of the laser robot and for the rotation detectors can be installed within the robot unit of the laser robot.


## BRIEF DESCRIPTION OF THE DRAWINGS

The above and other objects, features and advantages will become more apparent from the description of the preferred embodiment thereof taken in connection with the accompanying drawings, in which:

Fig. 1 is a schematic perspective view showing the fundamental constitution of a vertical, articulated, industrial laser robot in a first embodiment according to the present invention;

Fig. 2 is a side elevation concretely showing the laser robot of Fig. 1;

Fig. 3 is a back view of the laser robot of Fig. 2;

Fig. 4 is a partly sectional side elevation of the laser robot of Fig. 2, showing the side opposite the side shown in Fig. 2;

Fig. 5 is a partly sectional front view of the laser robot of Fig. 2;

Fig. 6 is a sectional side elevation concretely showing an articulated industrial laser robot in a second embodiment according to the present invention, having a construction similar to that shown in Fig. 1 and shown in Figs. 2 to 5, except that the driving system is different from that of the laser robot of Fig. 1;

Fig. 7 is a sectional front view of the articulated industrial laser robot of Fig. 6;

Fig. 8 is a perspective view showing the fundamental constitution of an articulated industrial laser robot of a horizontal type in a third embodiment according to the present invention; and

Figs. 9 and 10 are perspective views of conventional laser robots.


## BEST MODE OF CARRYING OUT THE INVENTION

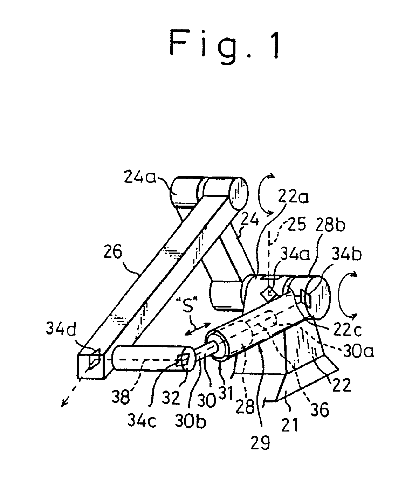

Referring to Fig. 1, the robot unit of an articulated industrial laser robot in a first embodiment according to the present invention comprises a robot base 21, and movable robot components, namely, a robot body 22 set upright on the robot base 21, a first robot arm 24 pivotally joined at its rear end 24b for a swing motion about a horizontal axis (W-axis) to the side surface of the upper end 22a of the robot body 22, a second robot arm 26 pivotally joined at its rear end 26b for a swing motion about a horizontal axis (U-axis) to the front end 24a of the first robot arm 24, and a robot wrist assembly, not shown, or the like attached to the front end 26a of the second robot arm 26. One end of a hollow tube 29 internally provided with a well-known internally ball-splined sleeve 28 is pivotally joined for a swing motion about the W-axis to the other side surface 22c of the upper end 22a of the robot body 22.

A hollow, externally ball-splined shaft 30 is fitted in the internally ball-splined sleeve 28 for sliding movement in directions indicated by a double-head arrow S. The hollow, externally ball-splined shaft 30 is joined at its outer end 30b to the extremity of a short, hollow post member 32 projecting from a portion of the second robot arm 26 near the front end of the latter. The internally ball-splined sleeve 28 and the hollow, externally ball-splined shaft 30 are straight members having a high mechanical rigidity, slide axially relative to each other as the first robot arm 24 and the second robot arm 26 swing respectively about the "W-axis and the U-axis, and function as members forming a laser beam transmission unit 31. A laser beam emitted by a laser beam generating unit, not shown, travels through a laser beam transmission pipe 25 indicated by dotted lines and falls on the upper end 22a of the robot body 22. Then, an inclined mirror 34a reflects the laser beam on an inclined mirror 34b provided on one end of the hollow tube 29 fixedly holding the internally ball-splined sleeve 28, the inclined mirror 34b reflects the laser beam so that the laser beam travels along a laser beam path 36 indicated by a dotted line extending substantially through the respective central portions of the hollow, internally ball-splined sleeve 28 and the hollow, externally ball-splined shaft 30 to the extremity of the hollow post 32, an inclined mirror 34c reflects the laser beam so that the laser beam travels along a laser beam path 38 to the front end of the second robot arm 26, and an inclined mirror 34d disposed near the front end of the second robot arm 26 reflects the laser beam toward the robot wrist assembly, not shown, to emit the laser beam through the robot wrist assembly toward an external working point.

Thus, the laser beam does not travel through the movable robot components, namely, the robot body 22, the first robot arm 24, and the second robot arm 26; that is, the laser beam travels through the components of the laser robot other than those movable robot components to the laser beam emitting unit of the robot wrist assembly. The laser robot is provided only a small number of expensive mirrors, i.e., the four inclined mirrors 34a to 34d.

The internally ball-splined sleeve 28 and the hollow, externally ball-splined shaft 30 form the laser beam transmission unit 31 internally having a straight, tubular laser beam path to be shielded from the wiring and the piping. Thus, the laser beam transmission unit 31 ensures an accurate transmission of the laser beam, and enables sufficient room to be secured within the robot arms 24 and 26 and the robot body 22 for disposing driving devices, such as electric motors, for driving the first robot arm 24 and the second robot arm 26 for a swing motion respectively about the W-axis and the U-axis, and rotation detectors, such as encoders, for detecting the degrees of angular movement of the movable robot components. The interior spaces of the movable robot components are available as a space for containing the wiring for the electric motors and the rotation detectors, and piping for an auxiliary gas for laser machining.

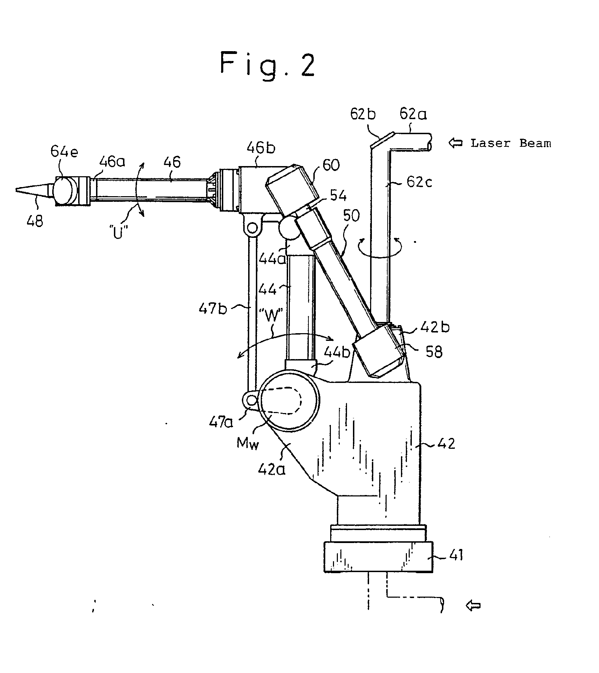

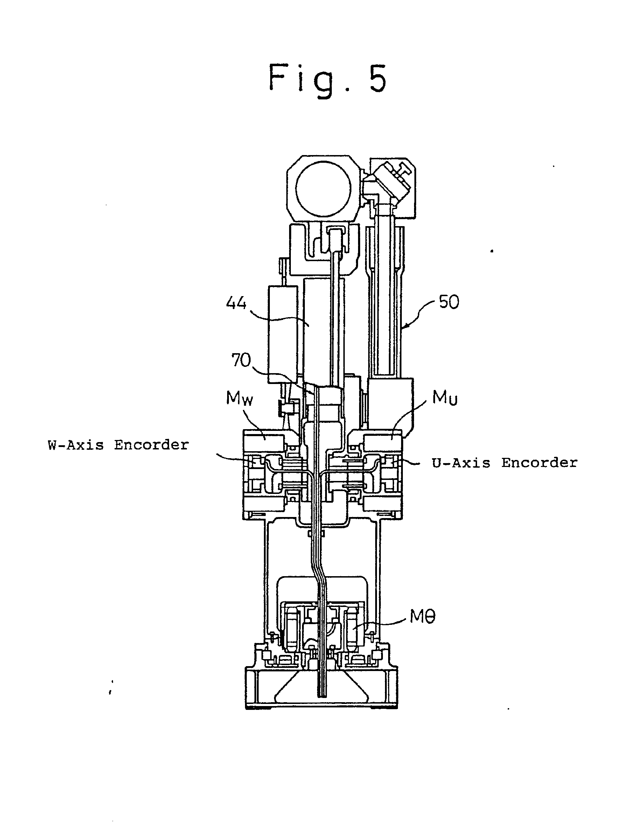

Figures 2 to 5 show the practical morphology of an articulated industrial laser robot having the basic construction shown in Fig. 1. Referring to Figs. 2 to 5, the laser robot comprises a robot base 41, a swivel robot body 42 mounted on the robot base 41, a first robot arm 44 pivotally joined at its rear end 44b to a projection 42a projecting to the front from the upper end of the swivel robot body 42, and a second robot arm 46 pivotally joined at its rear end 46b to the front end 44a of the first robot arm 44. Links 47a and 47b are extended between the projection 42a of the swivel robot body 42 and the rear end 46b of the second robot arm 46, a robot wrist assembly 48 having a laser beam emitting unit is attached to the front end 46a of the second robot arm 46, and an electric motor Mw for driving the first robot arm for swing motion about the W-axis and an electric motor Mu for driving the second robot arm 46 for a swing motion about the U-axis are held respectively on the opposite side surfaces of the projection 42a of the swivel robot body 42.

The upper end of a hollow, externally ball-splined shaft 54 is connected to a laser path connecting unit 60 joined to the rear end 46b of the second robot arm 46, and the lower end of the hollow, externally ball-splined shaft 54 engages an internally ball-splined sleeve 52 fixedly fitted in a hollow tube 50. The lower end of the hollow tube 50 is connected to a laser beam path connecting unit 58 internally provided with a mirror for reflecting a laser beam to change the direction of travel of the laser beam and joined to the swivel robot body 42.

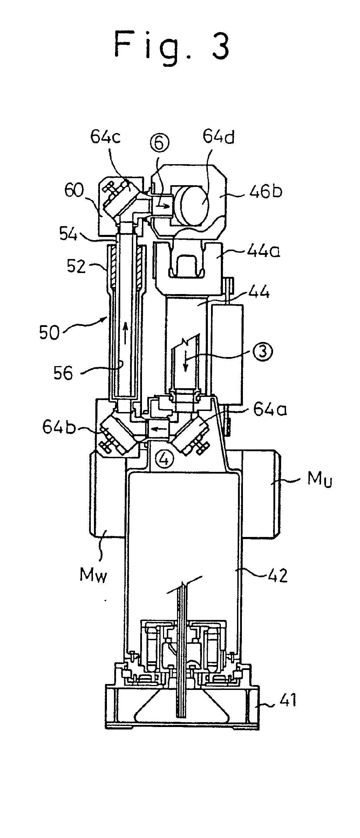

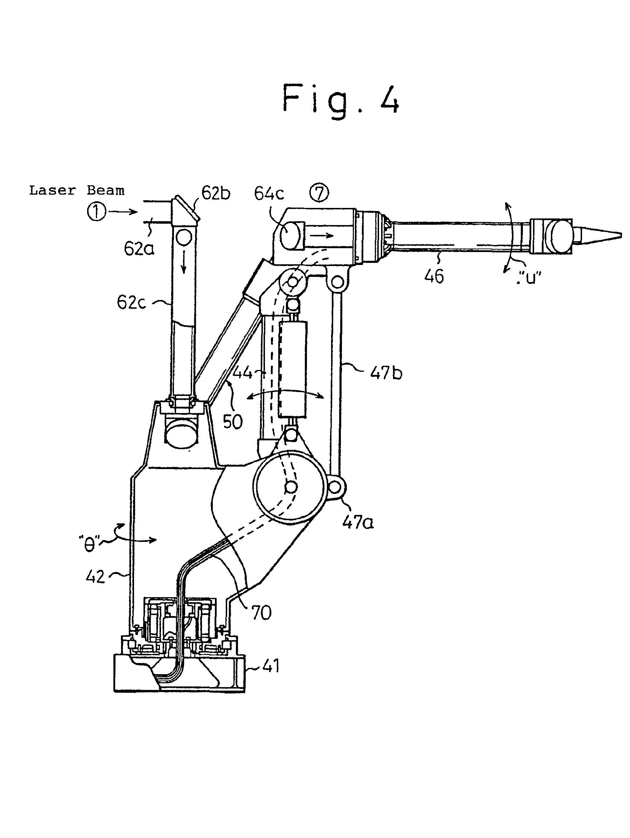

A laser beam emitted by a laser unit, not shown, is transmitted to the upper end of the swivel robot body 42 through an external laser beam transmission pipe 62a, an external mirror 62b and an external laser beam transmission pipe 62c, and then travels along laser beam paths in the directions indicated by arrows 1 to 7 in Figs. 3 and 4; that is, the laser beam is reflected by a mirror unit 64a and a mirror unit 64b included in the laser beam path connecting unit 58 so that the laser beam travels along a laser beam path 56 extending through the hollow tube 50, the laser beam is reflected again by a mirror unit 64c incorporated in the laser beam path connecting unit 60 and a mirror unit 64d disposed at the rear end 46b of the second robot arm 46 so as to travel straight through the interior of the second robot arm 46 to the robot wrist assembly 48. such an arrangement of the laser beam paths enables the omission of mirrors and associated members from the joint of the first and second robot arms, and thus sufficient space can be secured in the robot arms for installing the driving system including the electric motors, the electric wiring 70 and the piping, and a double-end support construction of the robot arm, having a high mechanical rigidity can be formed. Indicated at 64e is a laser mirror provided within the robot wrist assembly 48, which is necessary when the robot wrist assembly 48 has two degrees of freedom of motion and may be omitted when the same has one degree of freedom of motion.

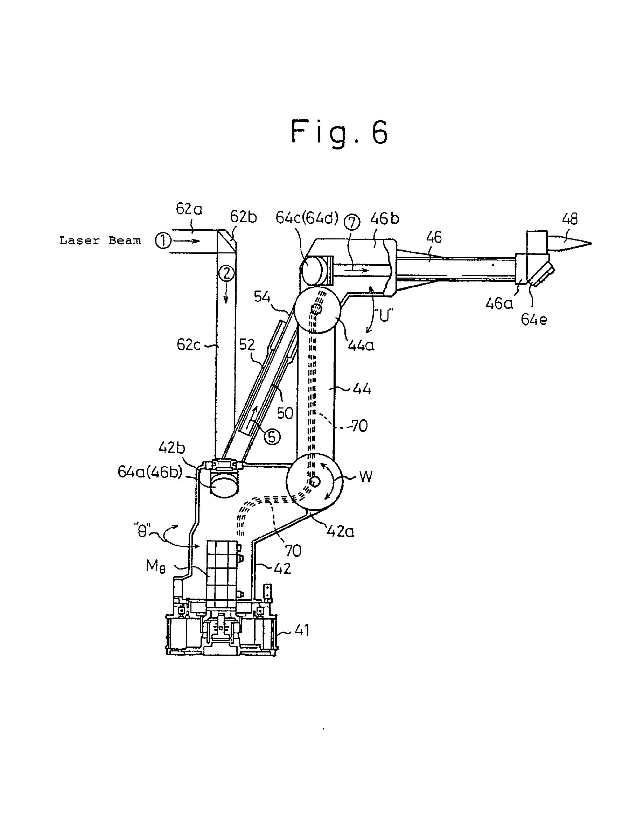

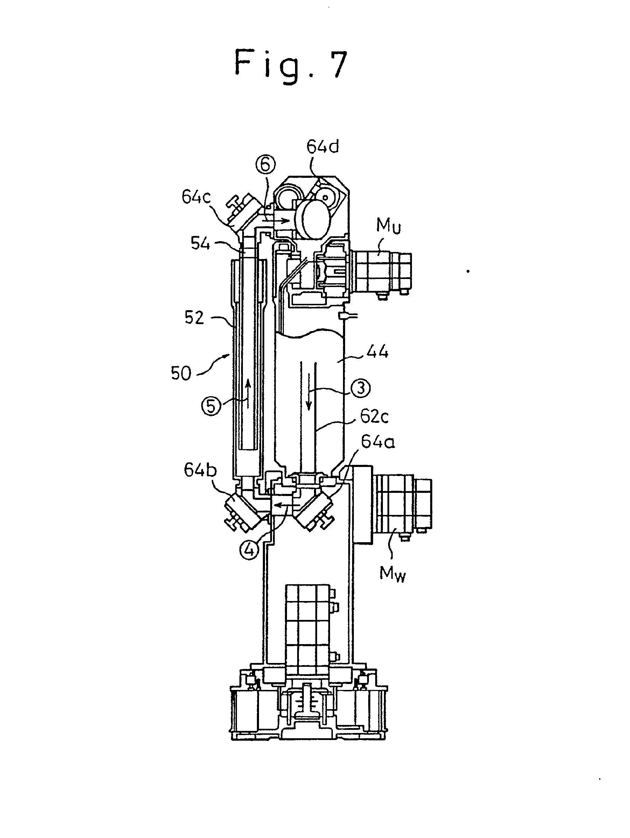

Figure 6 and 7 shows an articulated industrial laser robot similar in construction to that shown in Figs. 2 to 5, except that this laser robot has a second robot arm driven by direct driving means instead of the link mechanism. In Figs. 6 and 7, parts like or corresponding to those described with reference to Figs. 2 to 5 are denoted by the same reference characters.

Referring to Figs. 6 and 7, the swivel robot body 42 is provide internally with a motor $M\theta$ for driving the swivel robot body 42 for swiveling about a $\theta$-axis. Electric wiring 70 is extended from the interior of the swivel robot body 42 through a portion of the projection 42a projecting from the upper end of the swivel robot body 42 corresponding to the W-axis to a portion of the front end 44a of the first robot arm 44 corresponding to the U-axis. The driving motor Mw is held on the side surface of the projection 42a, and the driving motor Mu is held on the side surface of the upper end 44a of the first robot arm 44. A laser beam is transmitted through the external laser beam transmission pipe 62a, the external mirror 62b and the external laser beam transmission pipe 62c to the robot unit, the laser beam is reflected by the mirror units 64a to 64d so as to travel along laser beam paths indicated by arrows 1 to 7 including a main laser beam path formed by the internally ball-splined sleeve and the hollow, externally ball-splined shaft into the second robot arm 46, and the laser beam travels through the second robot arm 46 to the robot wrist assembly 48. Thus, only the four mirror units 64a to 64d are used to transmit the laser beam through the movable robot components of the laser robot. Since the laser beam path is formed by the hollow externally ball-splined shaft, the internally ball-splined sleeve and the hollow tube 50, the internal spaces of the movable robot components including the swivel robot body 42 and the first robot arm 44 are effectively available for sufficient wiring space. Since the least necessary number of reflecting mirrors are employed for changing the direction of travel of the laser beam, the attenuation of the energy of the laser beam during the transmission of the same through the robot unit is suppressed to the least extent. Further, since the assembly of the hollow, externally ball-splined shaft and the internally ball-splined sleeve forming the laser beam path has a compact construction, the lateral width of the laser robot is increased scarcely, and thus the interference of the laser robot with the equipment installed around the laser robot is avoided.

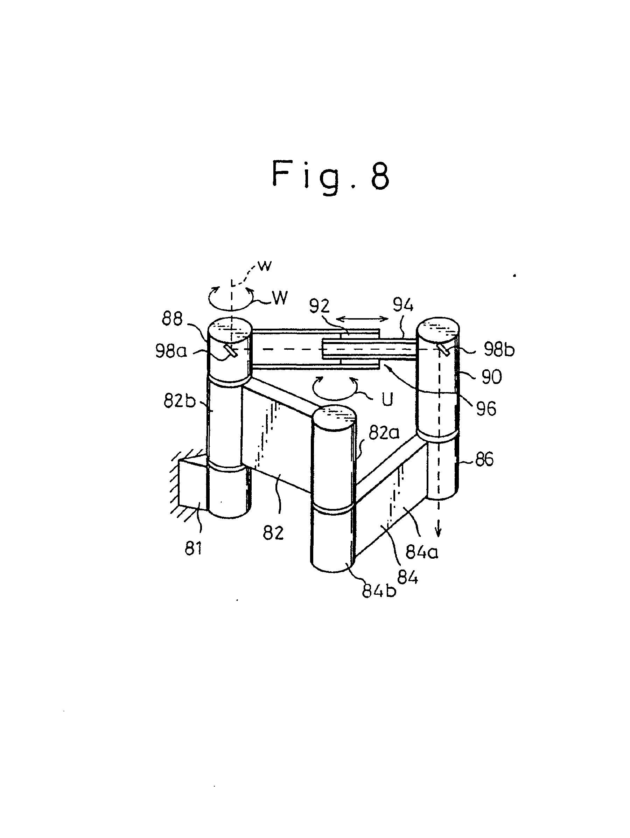

Figure 8 shows an articulated industrial laser robot of a horizontal type in a third embodiment according to the present invention. The laser robot comprises a robot base 81, a first robot arm 82 pivotally joined at its rear end 82b to the upper end of the robot base 81, a second robot arm 84 pivotally joined at its rear end 84b to the front end 82a of the first robot arm 82, and a robot wrist assembly 86 attached to the front end 84a of the second robot arm 84. Both the first robot arm 82 and the second robot arm 84 are capable of swinging respectively about a vertical W-axis and a U-axis parallel to the W-axis. A telescopic laser beam path unit 96 including an internally ball-splined sleeve 92 and a hollow, externally ball-splined shaft 94 is extended between a laser beam path connecting unit 88 attached to the upper end of the rear end 82b of the first robot arm 82, and a laser beam path connecting unit 90 attacked to the upper end of the front end 84a of the second robot arm 84. The direction of travel of a laser beam emitted by a laser beam generating unit, not shown, and transmitted through external laser beam transmission pipes to the robot unit is changed by a mirror unit 98a included in the laser beam path connecting unit 88 and a mirror unit 98b included in the laser beam path connecting unit 90 so that the laser beam travels through the laser beam path unit 96 and the laser beam path connecting units 88 and 90 to the robot wrist assembly 86. Then, the laser beam is emitted through the robot wrist assembly 86 toward a desired working point. Thus, similarly to the fundamental constitution shown in Fig. 1, the constitution of the laser robot shown in Fig. 8 secures a laser beam path exclusively for transmitting the laser beam, and requires the least necessary number of mirror units. The internal spaces of the first robot arm 82 and the second robot arm 84 are available for installing the electric wiring and the piping for an auxiliary gas for laser machining. Since the internal spaces of the robot arms 82 and 84 are not used at all for passing the laser beam, structural complication necessary for the joint arrangement of the laser beam paths, the wiring and the piping is eliminated, and wiring and piping work are facilitated. Since the laser beam paths are separate from the movable robot components, the adjustment of the inclinations of the laser beam reflecting mirrors and maintenance work for cleaning the surfaces of the laser beam reflecting mirrors are remarkably facilitated.

As apparent from the description of the fundamental constitution of the present invention and the concrete embodiments of the same, according to the present invention, a telescopic laser beam path unit comprising an internally ball-splined sleeve and a hollow, externally ball-splined shaft slidably engaging the internally ball-splined sleeve is provided as an exclusive laser beam path within the range of motion of the movable robot components, and the least necessary number of mirror units for changing the direction of travel of the laser beam are employed. Accordingly, the energy loss of the laser beam due to reflection by the mirrors is reduced, sc that the laser robot is able to use a high-energy laser beam for laser machining including welding, cutting, seam welding and deburring, and is capable of achieving a precision laser beam transmission. Since the mirrors are provided in the laser beam path unit and the laser beam path connecting units, which are separate from the movable robot components, and in portions of the movable robot components which are comparatively easily accessible, the adjustment and maintenance of the mirrors can be easily achieved, which simplifies the routine inspection work and periodic maintenance work essential to the maintenance of the performance of the laser robot.

Furthermore, the electric wiring for the rotation detectors and the driving devices for driving the movable robot components and the piping for the auxiliary gas for laser machining can be installed within the internal spaces of the robot unit including the swivel robot body and the robot arms.

Still further, since the laser beam path unit has a compact construction and is capable of being provided within the range of motion of the swivel robot body and the robot arms, disadvantages such as the interference of the laser beam path unit with the equipment installed around the laser robot can be completely eliminated.

Moreover, since the joints are not provided with a mirror, a sufficient space can be secured for installing the drive devices, such as drive motors, and the laser robot is able to employ a double-end support construction of a robot arm, having a high mechanical rigidity, and well-known direct-drive motors as means for driving the movable robot components, without difficulty.

LIST OF REFERENCE CHARACTERS

| | |
|---|---|
| 1 | Robot base |
| 2 | Swivel robot body |
| 3 | First robot arm |
| 2a | Projection |
| 3a | Bifurcate front end |
| 3b | Rear end |
| 4 | Second robot arm |
| 4a | Front end |
| 4b | Rear end |
| 5 | Robot wrist assembly |
| 5a | Laser beam emitting unit |
| 6 | Laser unit |
| 6a, 6b | Laser beam transmission pipes |
| 7a to 7e | Mirrors |
| 11 | Robot base |
| 12 | Swivel robot body |
| 13 | First robot arm |
| 13a | Front end |
| 13b | Rear end |
| 14 | Second robot arm |
| 14a | Front end |
| 14b | Rear end |
| 15 | Robot wrist assembly |
| 15a | Laser beam emitting unit |
| 16 | Laser unit |
| 16a, 16b | Laser beam paths |
| 17a to 17d | Mirrors |
| 21 | Robot base |
| 22 | Robot body |
| 22a | Upper end |
| 22c | Side surface |
| 24 | First robot arm |
| 24a | Front end |
| 24b | Rear end |
| 26 | Second robot arm |
| 26a | Front end |
| 26b | Rear end |
| 28 | Internally ball-splined sleeve |
| 29 | Hollow tube |
| 30 | Externally ball-splined shaft |
| 30a | Inner end |
| 30b | Outer end |
| 31 | Laser beam path unit |
| 32 | Hollow post |
| 34a to 34d | Inclined mirrors |
| 36 | Laser beam path |
| 38 | Path |
| 41 | Robot base |
| 42 | Swivel robot body |
| 42 | a Projection |
| 44 | First robot arm |
| 44a | Front end |
| 44b | Rear end |
| 46 | Second robot arm |
| 46a | Front end |
| 46b | Rear end |
| 47a, 47b | Links |
| 48 | Robot wrist assembly |
| 50 | Hollow tube |

| 52 | Internally ball-splined sleeve |
| 54 | Hollow, externally ball-splined shaft |
| 56 | Laser beam path |
| 58 | Laser beam path connecting unit |
| 60 | Laser beam path connecting unit |
| 62a | External laser beam transmission pipe |
| 62b | External mirror |
| 62c | External laser beam transmission pipe |
| 64a to 64d | Mirror units |
| 64e | Mirror |
| $M\theta$, Mu, Mw | Driving motors |
| 70 | Electric wiring |
| 81 | Robot base |
| 82 | First robot arm |

## Claims

1. An articulated industrial laser robot comprising: a robot base, at least two robot arm means articulated to each other and movably held for motion relative to the robot base, and a robot wrist assembly having a laser beam emitting unit and held on the extremity of the two robot arm means; characterized in that:

   a laser beam path means capable of telescopically extending and contracting according to a swing motion of said two robot arm means relative to each other and comprising a hollow, externally ball-splined shaft and a hollow, internally ball-splined sleeve is extended between said two robot arm means to transmit a laser beam emitted by an external laser beam source and transmitted to said robot wrist; and

   a least necessary number of laser beam reflecting mirror means are provided in said laser beam path means.

2. An articulated industrial laser robot according to claim 1, wherein said two robot arm means are movably connected through a swivel robot body to said robot base.

3. An articulated industrial laser robot according to claim 1, wherein said two robot arm means are articulated directly to said robot base.

4. An articulated industrial laser robot according to claim 1, wherein said two robot arm means are a robot forearm to the extremity of which said robot wrist assembly is attached, and a robot upper arm articulated to said robot forearm.

5. An articulated industrial laser robot according to claim 4, wherein a front extremity of said laser beam path means is joined to a hollow laser beam path connecting means attached to said robot forearm, and a laser beam is transmitted to said robot forearm through said laser beam path means and said laser beam path connecting means attached to said robot forearm.

6. An articulate industrial laser robot according to claim 5, wherein a rear extremity of said laser beam path means is connected to a laser beam path connecting means pivotally joined to said robot base.

7. An articulated industrial laser robot according to claim 5, wherein a rear extremity of said laser beam path means is connected to a laser beam path connecting means pivotally joined to a robot body mounted on said robot base.

8. An articulated industrial laser robot according to claim 7, wherein said robot body comprises a swivel robot body.

9. An articulated industrial laser robot according to claim 7, wherein said robot body comprises a stationary robot body fixedly set upright on said robot base.

# Fig. 1

# Fig. 2

# Fig. 3

# Fig. 4

Laser Beam ① → 62b 64c ⑦ 62a 62c 46 ."u" 44 50 47b 47a "θ" 42 70 41

# Fig. 5

44

50

70

$M_W$

$M_U$

W-Axis Encorder

U-Axis Encorder

$M\theta$

# Fig. 6

Laser Beam

# Fig. 7

# Fig. 8

# Fig. 9
## PRIOR ART

6

Laser Beam Generating Unit

# Fig.10
## PRIOR ART

16

Laser Beam Generating Unit

16a

17d 14b 13a

14

14a

15

17c

"θ"

16b

13

17a

15a

13b

17b

12

11

17

# INTERNATIONAL SEARCH REPORT

International Application No PCT/JP90/00104

## I. CLASSIFICATION OF SUBJECT MATTER (if several classification symbols apply, indicate all) 6

According to International Patent Classification (IPC) or to both National Classification and IPC

Int. Cl$^5$    B23K26/08

## II. FIELDS SEARCHED

### Minimum Documentation Searched 7

| Classification System | Classification Symbols |
|---|---|
| IPC | B23K26/00 - 26/18 |

### Documentation Searched other than Minimum Documentation to the Extent that such Documents are Included in the Fields Searched 8

| | |
|---|---|
| Jitsuyo Shinan Koho | 1926 - 1989 |
| Kokai Jitsuyo Shinan Koho | 1971 - 1989 |

## III. DOCUMENTS CONSIDERED TO BE RELEVANT 9

| Category * | Citation of Document, 11 with indication, where appropriate, of the relevant passages 12 | Relevant to Claim No. 13 |
|---|---|---|
| X | JP, A, 62-134192 (Toshiba Corp.), 17 June 1987 (17. 06. 87), Column 4, line 10 to column 9, line 5 (Family: none) | 1 - 9 |

* Special categories of cited documents: 10

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search | Date of Mailing of this International Search Report |
|---|---|
| February 28, 1990 (28. 02. 90) | March 5, 1990 (05. 03. 90) |
| International Searching Authority | Signature of Authorized Officer |
| Japanese Patent Office | |

Form PCT/ISA/210 (second sheet) (January 1985)